(19) Europäisches Patentamt
European Patent Office
Office européen des brevets

(11) Veröffentlichungsnummer: **0 247 427**
**A2**

(12) **EUROPÄISCHE PATENTANMELDUNG**

(21) Anmeldenummer: **87106834.2**

(51) Int. Cl.4: **C08L 67/02** , C08K 5/34

(22) Anmeldetag: **12.05.87**

(30) Priorität: **15.05.86 DE 3616431**

(43) Veröffentlichungstag der Anmeldung:
**02.12.87 Patentblatt 87/49**

(84) Benannte Vertragsstaaten:
**AT BE CH DE FR GB IT LI NL SE**

(71) Anmelder: **HOECHST AKTIENGESELLSCHAFT**
**Postfach 80 03 20**
**D-6230 Frankfurt am Main 80(DE)**

(72) Erfinder: **Blöcker, Erich, Dr.**
**Cherusker Strasse 7**
**D-6238 Hofheim am Taunus(DE)**

(54) **Polyesterformmasse, Verfahren zu ihrer Herstellung und ihre Verwendung.**

(57) Die Erfindung betrifft Polyesterformmassen bestehend im wesentlichen aus dem Polyester, vorzugsweise Polyethylenterephthalat, einem Nukleierungsmittel, einer speziellen Imidverbindung als weiterem Kristallisationsbeschleuniger sowie gegebenenfalls den üblichen Verstärkungsmitteln und Zusatzstoffen. Der spezielle erfindungsgemäße Kristallisationsbeschleuniger ist praktisch nicht reaktiv mit dem Polyester und insbesondere erheblich migrations-beständiger als einschlägige Kristallisationsbeschleuniger gemäß Stand der Technik. Die Erfindung hat weiterhin ein Verfahren zur Herstellung dieser Polyesterformmassen zum Gegenstand.

EP 0 247 427 A2

## Polyesterformmasse, Verfahren zu ihrer Herstellung und ihre Verwendung

Die Erfindung betrifft eine Polyesterformmasse aus einem Polyester, einem Nukleierungsmittel, einer niedermolekularen organischen Verbindung als Kristallisationsbeschleuniger sowie gegebenenfalls Verstärkungsmittel und andere Zusatzstoffe. Weiterhin ist sie auf ein Verfahren zur Herstellung dieser Formmasse sowie deren Verwendung zur Herstellung von Formkörpern gerichtet.

Es ist bekannt, daß Polyethylenterephthalat im Verhältnis zum Polybutylenterephthalat nur eine geringe Kristallisationsneigung zeigt bzw. daß dessen Kristallisationsgeschwindigkeit erheblich geringer ist. Es ist weiterhin bekannt, daß die Kristallisationsgeschwindigkeit von Polyethylenterephthalat durch Zusatz von Nukleierungsmitteln vor, während oder nach der Synthese der Polyesters gesteigert werden kann. Da bei der Verarbeitung von Polyesterformmassen zu Formkörpern durch Spritzguß die Temperatur der Form möglichst nicht mehr als 110°C betragen soll, muß der Polyester bei dieser Formtemperatur möglichst gut und schnell kristallisieren, um Formteile mit guten physikalischen Eigenschaften zu erhalten. Dies wird im allgemeinen durch den alleinigen Zusatz von Nukleierungsmitteln nicht erreicht. Durch zusätzliche Verwendung eines organischen Kristallisationsbeschleunigers, der die molekulare Kettenbeweglichkeit des Polyesters in der Schmelze erhöht, kann die Kristallisation des Polyethylenterephthalats nochmals verbessert werden. Dadurch wird der Temperaturbereich, in dem beim Abkühlen aus der Schmelze eine Kristallisation ablaufen kann, erweitert. Eine derartige Kombination von Zusätzen zum Polyethylenterephthalat bzw. auch zu Polyethylenterephthalat/Polybutylenterephthalat-Mischungen zwecks Herstellung schnellkristallisierender Polyestermassen ist u.a. aus den DE-Patentschriften 26 39 428, 29 07 729 und 29 07 779 bekannt.

Der Zusatz eines organischen Kristallisationsbeschleunigers bzw. Weichmachers soll aber andere Eigenschaften des Polyesters nicht negativ beeinflussen. Insbesondere soll der Kristallisationsbeschleuniger einerseits im Polyester löslich sein, andererseits aber nicht mit dem Polyester chemisch reagieren und damit einen Molekulargewichtsabbau des Polyesters bewirken.

Desweiteren soll er aber auch möglichst wenig flüchtig sein und eine geringe Migrationsneigung besitzen. In der Praxis bedeutet dies, daß der eingearbeitete Kristallisationsbeschleuniger bei Langzeit-Temperaturbelastung des Formkörpers aus diesem schnellkristallisierenden Polyester möglichst wenig an die Oberfläche migrieren soll, um deren Erscheinungsbild und physikalische Eigenschaften nicht negativ zu beeinflussen.

Ein großer Teil der bisher für Polyethylenterephthalat bekannten Kristallisationsbeschleuniger erfüllt diese zusätzlichen Anforderungen nicht. Insbesondere führen organische Verbindungen mit Estergruppen zu einem deutlichen Abbau der Polyestermatrix während der Einarbeitungsstufe in die Polyesterschmelze. Außerdem sind die üblichen Kristallisationsbeschleuniger auf Esterbasis, falls sie nicht ein hohes Molekulargewicht besitzen, für viele praktische Einsatzzwecke der Formmassen aus dem Polyester nicht migrationsbeständig genug.

Der Zusatz von bestimmten organischen Imidverbindungen zu Polyethylenterephthalat bzw. Polyestern ist bekannt. So wird in der US-Patentschrift 3 575 931 Phthalimid als Zusatz zum Polyethylenterephthalat erwähnt, das hier aber als dispergierbares Nukleierungsmittel dient, da es eine hochpolare organische Verbindung ist und damit ähnlich wie die Metallsalze wirkt.

In der EP-Patentschrift 029 930 wird der Zusatz von 3 bis 20 Gew.-% einer organischen Verbindung mit mindestens einer Imidgruppe pro Molekül und einem Schmelzpunkt von über 240°C beschrieben. Es handelt sich hier um Imidverbindungen mit aromatischen Ringsystemen, die im allgemeinen mit Chlor oder Brom substituiert sind und einen $C_1$-bis $C_6$-Alkyl-oder Alkylenrest enthalten können. Aufgrund ihrer Struktur und ihres hohen Schmelzpunktes wirken diese Imidverbindungen nicht als Weichmacher sondern als Nukleierungsmittel, da deren Schmelzpunkte bevorzugt über dem Schmelzpunkt der Polyestermatrix liegen. Außerdem ist ausgeführt, daß der Zusatz von anderen Nukleierungsmitteln unnötig oder gar unerwünscht ist. Die Beispiele und Vergleiche zeigen, daß die niedriger schmelzenden Imidverbindungen nicht die gewünschten Eigenschaften erbringen.

In der EP-Offenlegungsschrift 057 387 ist schließlich die Herstellung von film-oder faserförmigen Strukturen aus aromatischen Polyestern durch Verwendung von schmelzviskositätsmindernden Zusätzen beschrieben, die nach der Verstreckung der Filme oder Fasern durch Extraktion mit Lösungsmitteln wieder herausgelöst und somit wieder entfernt werden. Als mit den Polyestern mischbare, aber praktisch nicht reaktive, niedrigmolekulare Verbindungen werden unter anderem auch Imidverbindungen erwähnt. Diese - schmelzviskositätsmindernden Verbindungen sollen bevorzugt Siedepunkte von mindestens 250°C und Schmelzpunkte von mindestens 100°C besitzen, damit die den Glaspunkt des Polyesters nicht wesentlich absenken. Die Extraktion ist dabei naturgemäß nur bei relativ dünnen geformten Gebilden anwendbar.

Polyester-Rohstoffe für Spritzgußartikel kann man demgegenüber nicht mit großen Mengen niedrigmolekularer Verbindungen versetzen, geschweige nach der Formbildung diese wieder extrahieren, ohne die mechanischen und physikalischen Eigenschaften der Artikel so stark zu verändern, daß die praktisch nicht mehr verwendbar sind.

Der vorliegenden Erfindung liegt daher die Aufgabe zugrunde, schnellkristallisierende Polyesterformmassen bereitzustellen, welche die Nachteile des Standes der Technik nicht oder zumindest nur in vermindertem Umfang besitzen.

Die Erfindung betrifft daher eine Polyesterformmasse bestehend im wesentlichen aus

(A) einem Polyester mit einer reduzierten spezifischen Viskosität (gemessen in 1 %iger Lösung in Dichloressigsäure bei 25°C) von mindestens 0,3 dl/g,

(B) einem Nukleierungsmittel,

(C) einer niedermolekularen organischen Verbindung als Kristallisationsbeschleuniger und

(D) gegebenenfalls Verstärkungsmitteln sowie anderen Zusatzstoffen

dadurch gekennzeichnet, daß (C) eine organische Imidverbindung ist, die α) mindestens eine mit einem aliphatischen Rest mit mindestens 5 C-Atomen substituierte Imidgruppe pro Molekül enthält, oder β) eine Imidesterverbindung ist, bei der die Imidgruppe mit einem aliphatischen Rest mit mindestens 2 C-Atomen oder mit dem Rest eines aromatischen Carbonsäureesters substituiert ist, einen Schmelzpunkt von unter 200°C hat und in einer Menge vorhanden ist, die ausreicht, um die Kristallisationstemperatur der Formmasse gegenüber. derjenigen ohne (C) um mindestens 4°C zu erniedrigen.

Für den Polyester gemäß Komponente (A) der erfindungsgemäßen Formmasse kommen grundsätzlich alle bekannten kristallisierfähigen, linearen oder schwach verzweigten Polyester in Frage, wie sie beispielsweise in (R.E. Wilfong, J. Polymer Sci. 54, S. 385-410 (1961) oder in Ullmanns Enzyklopädie der technischen Chemie (4. Aufl.) 19, S. 61-68 (1980), beschrieben sind. Bevorzugt ist jedoch Polyethylenterephthalat. Ein anderer Polyester, der erfindungsgemäß auch eingesetzt werden kann, ist zum Beispiel Polycyclohexan-1,4-dimethylolterephthalat.

Geeignet sind ferner Polyester, die als Säurekomponenten neben Terephthalsäure bis zu 20 Molprozent, vorzugsweise bis zu 10 Molprozent andere aromatische, araliphatische oder aliphatische Dicarbonsäuren und/oder bis zu 2 Molprozent, vorzugsweise bis zu 1 Molprozent tri-oder mehrfunktionelle Carbonsäuren enthalten und die als Diolkom ponente neben Butylenglykol oder vorzugsweise Ethylenglykol bis zu 20 Molprozent, vorzugsweise bis zu 10 Molprozent aromatische, araliphatische, oder andere aliphatische Diole und/oder bis zu 2 Molprozent, vorzugsweise bis zu 1 Molprozent, tri-oder mehrfunktionelle Alkohole enthalten.

Zu den hier angesprochenen Dicarbonsäuren und den tri-oder mehrfunktionellen Carbonsäuren gehören zum Beispiel Isophthalsäure, Phthalsäure, alkylsubstituierte Phthalsäuren, alkylsubstituierte Isophthalsäuren oder alkylsubstituierte Terephthalsäuren, Naphthalindicarbonsäuren, wie z.B. 2,6-Naphthalindicarbonsäure, 2,7-Naphthalindicarbonsäure, aliphatische Dicarbonsäuren, wie z.B. Bernsteinsäure, Adipinsäure, Sebacinsäure oder Dekandicarbonsäure, alicyclische Dicarbonsäuren wie z.B. Cyclohexandicarbonsäuren, Trimesinsäure, Trimellitsäure oder Pyromellitsäure.

Zu den oben angesprochenen Diolkomponenten oder den tri-bzw. mehrfunktionellen Alkoholen gehören zum Beispiel Trimethylenglykol, 1,2-Propandiol, Hexamethylenglykol, Neopentylglykol, Di-oder Triethylenglykol, 1,4-Cyclohexandimethanol, Di-oder Polyhydroxybenzole, wie z.B. Hydrochinon oder Resorcin, Bisphenole, wie z.B. Bisphenol A, Bisphenol F, und aromatische Diole, wie z.B. Etherdiole aus Bisphenolen und Glykolen, Trimethylolpropan oder Pentaerythrit. Als Diolkomponenten können ferner lineare Oligo-bzw. Polyester oder Oligo-bzw. Polyether mit je zwei endständigen Hydroxylgruppen und Molekulargewichten bis zu 10 000 g/mol oder vorzugsweise bis zu 5000 g/mol, besonders bevorzugt bis 2000 g/mol gewählt werden. Hierzu gehören zum Beispiel Polytetrahydrofurane und Polyethylenoxide mit Molekulargewichten von 400 bis 2000 g/mol. Statt oder zusätzlich zu diesen Cokomponenten kann der erfindungsgemäße Polyester auch bis zu 20 Molprozent, vorzugsweise bis zu 10 Molprozent, Hydroxycarbon säuren, wie z.B. ε-Hydroxycapronsäure, Hydroxybenzoesäure oder Hydroxyethoxybenzoesäure enthalten.

Neben den Homopolyestern und den Copolyestern auf Basis von Polybutylenterephthalat oder Polyethylenterephthalat selbst kann als Polyester auch eine Mischung der Homo-und Copolyester, wie z.B. ein Gemisch aus Polybutylenterephthalat und Polyethylenterephthalat, oder auch Gemische eines oder mehrerer der angesprochenen Homo-oder Copolyester mit mindestens einem weiteren Polyester, wie z.B. Gemische aus Polyethylenterephthalat und einem Polyester auf Basis Bisphenol A/Isophthalsäure/Terephthalsäure, als Komponente (A) zum Einsatz kommen.

Der erfindungsgemäß eingesetzte Polyester hat eine reduzierte spezifische Viskosität, gemessen als 1 %ige Lösung in Dichloressigsäure bei 25°C, von mindestens 0,3 dl/g, vorzugsweise von mindestens 0,5 dl/g und besonders bevorzugt von mindestens 0,6 dl/g.

Als Nukleierungsmittel entsprechend der Komponente (B) der erfindungsgemäßen Formmassen kommen die hierfür bei Polyestern bekannten Verbindungen in Betracht, wie beispielsweise Talkum, Titandioxid, Glimmer, Siliziumdioxid etc. Vorzugsweise werden erfindungsgemäßen für diesen Zweck (Erd-)Alkalimetall oder (Erd-)Alkalimetall-Verbindungen eingesetzt. Der Begriff "(Erd-)Alkalimetall" soll dabei sowohl die Erkalkali-als auch die Alkalimetalle umfassen, wobei letztere bevorzugt sind. Als Erdalkalimetalle kommen vorzugsweise Magnesium und Calcium und als Alkalimetalle Lithium, Natrium und Kalium in Frage. Natrium ist dabei besonders bevorzugt. Auch Legierungen dieser Metalle untereinander sowie mit anderen Metallen, wie in er DE-Offenlegungsschrift 18 04 914 beschrieben, können erfindungsgemäß eingesetzt werden.

Als Verbindungen der (Erd-)Alkalimetalle sind generell alle Verbindungen dieser Metalle mit H-aciden anorganischen oder organischen Verbindungen geeignet, sofern sie die Umesterung oder Polykondensation nicht nachteilig beeinflussen.

Als anorganische Verbindungen der (Erd-)Alkalimetalle, vorzugsweise des Natriums, kommen beispielsweise die entsprechenden Silikate, Phosphate, Phosphite, Sulfate oder bevorzugt Carbonate, Hydrogencarbonate und Hydroxide in Frage.

Zu den organischen Verbindungen der (Erd-)Alkalimetalle, vorzugsweise des Natriums, gehören die entsprechenden Salze von aliphatischen, araliphatischen oder aromatischen Carbonsäuren mit vorzugsweise bis zu 30 C-Atomen und vorzugsweise 1 bis 4 Carboxylgruppen. Beispiele hierfür sind die Alkalimetall-Salze der Ameisensäure, Essigsäure, Propionsäure, Buttersäure, Isobuttersäure, Caprylsäure, Stearinsäure, Cyclohexancarbonsäure, Bernsteinsäure, Adipinsäure, Korksäure, 1,10-Decandicarbonsäure, 1,4-Cyclohexandicarbonsäure, Terephthalsäure, 1,2,3-Propantricarbonsäure, 1,3,5-Cyclohexantricarbonsäure, Trimellitsäure, 1,2,3,4-Cyclopentantetracarbonsäure, Pyromellitsäure, Benzoesäure und substituierte Benzoesäuren, sowie neutrale oder teilneutralisierte Montanwachssalze oder Montanwachsestersalze (Montanate).

Auch Salze mit andersgearteten Säureresten, wie z.B. Alkali-Paraffinsulfonate, Alkali-Olefinsulfonate und Alkali-Arylsulfonate oder auch Phenolate sowie Alkoholate, wie z.B. Methanolate, Ethanolate, Glykolate, können erfindungsgemäß eingesetzt werden. Bevorzugt werden Natriumcarbonat, Natriumhydrogencarbonat, Natriumhydroxid, Natriumsalze von Mono-und Polycarbonsäuren, insbesondere die aliphatischer Mono- und Polycarbonsäuren mit vorzugs weise 2 bis 18 C-Atomen, insbesondere 2 bis 6 C-Atomen und bis zu vier, vorzugsweise bis zu zwei Carboxylgruppen, sowie Natriumalkoholate mit vorzugsweise 2 bis 15 C-Atomen insbesondere 2 bis 8 C-Atomen, verwendet. Beispiele besonders bevorzugter Vertreter sind: Natriumacetat, Natriumpropionat, Natriumbutyrat, Natriumoxalat, Natriummalonat, Natriumsuccinat, Natriummethylat, Natriumethylat, Natriumglykolat. Es können auch Gemische verschiedener (Erd-)Alkalimetallverbindungen eingesetzt werden.

Die Menge an Nukleierungsmittel beträgt im allgemeinen $2.10^{-3}$ bis 0,1 mol, vorzugsweise $5.10^{-3}$ bis $6.10^{-2}$ mol pro kg des Polyesters.

Als Kristallisationsbeschleuniger ( Komponente (C)) dient in der erfindungsgemäßen Formmasse eine organische Imidverbindung, die mindestens eine mit einem aliphatischen Rest mit mindestens 5 C-Atomen subsituierte Imidgruppe pro Molekül enthält, wobei der Schmelzpunkt unterhalb von 200°C, vorzugsweise unterhalb von 150°C und besonders bevorzugt unterhalb von 100°C liegt. Mit über 200°C schmelzenden Imidverbindungen wird kein ausreichender Effekt als Kristallisationsbeschleuniger erzielt.

Bevorzugt leitet sich die organische Imidverbindung von einer aromatischen Di-oder Tetracarbonsäure ab und besitzt die nachstehenden allgemeinen Formeln (I), (II) oder (III):

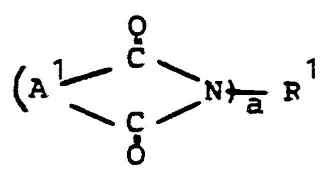

(I)

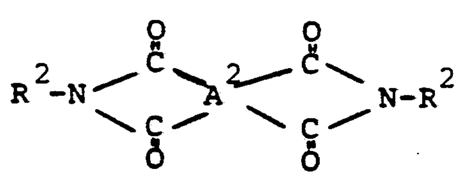

(II)

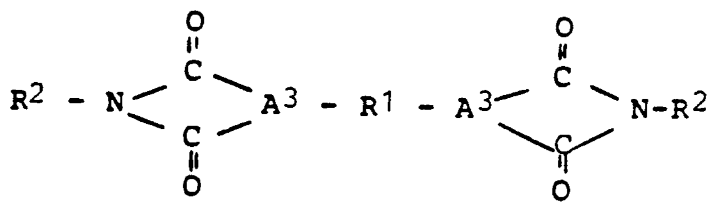 (III)

Darin bedeuten:

$A^1$ = divalenter aromatischer Rest, unsubstituiert oder substituiert, wie beispielsweise 1,2-Phenyl, 1,2-, 2,3- oder 1,8-Naphthyl. Als Substituenten kommen vor allem $C_{1-6}$-Alkyl, Halogen, Alkoxygruppen mit vorzugsweise 1 bis 4 C-Atomen und Carbonestergruppen mit 1 bis 18, vorzugsweise 1 bis 4 C-Atomen im Alkoholrest in Betracht;

im Falle von a = 2 können die beiden Reste $A^1$ gleich oder verschieden sein;

$R^1$ verzweigter oder unverzweigter, unsubstituierter oder substituierter aliphatischer Rest mit mindestens 5 C-Atomen, vorzugsweise 8 bis 20 C-Atomen, wobei die Kohlenstoffkette keine Mehrfachbindungen und reaktive Substituenten aufweist. Sie kann jedoch Heteroatome wie O, S oder NR' (R' = $R^1$; zusätzlich $C_{1-4}$-Alkyl), Atomgruppierungen wie -C(=O)-O-oder -C(=O)-NH-, $SO_2$ und/oder, Cycloalkyl-oder Aryl-Gruppen, z. B. insbesondere Phenyl-Gruppen enthalten.

Die Wertigkeit von $R^1$ entspricht der von a. Beispiele für derartige Reste ergeben sich aus nachstehenden Formeln;

a = 1 oder 2;

$A^2$ tetravalenter aromatischer Rest, wie

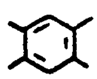 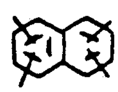 oder 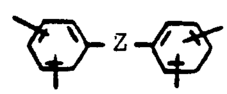

mit Z = $-CH_2-$, -O-, $-SO_2-$oder -CO-; dieser Rest kann substituiert sein, beispielsweise wie oben bei $A^1$ beschrieben;

$R^2$ = $R^1$; die Reste können dabei gleich oder verschieden sein;

$A^3$ = aromatisches Ringsystem mit 6 bis 10 C-Atomen, die Reste können dabei gleich oder verschieden sein;

Derartige Imidverbindungen sind beispielsweise nachfolgende Verbindungen, wobei m und n ganze Zahlen von 5 bis 18, p ganze Zahlen von 12 bis 24, q ganze Zahlen von 1 bis 18, x Zahlen von ≧2, vorzugsweise 2 bis 18 und y ≧3, vorzugsweise 3 bis 50 bedeuten:

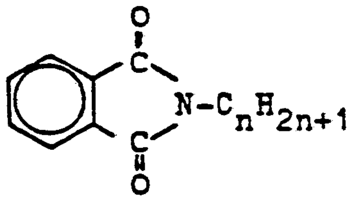

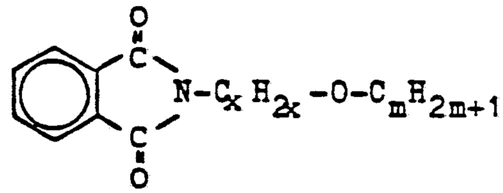

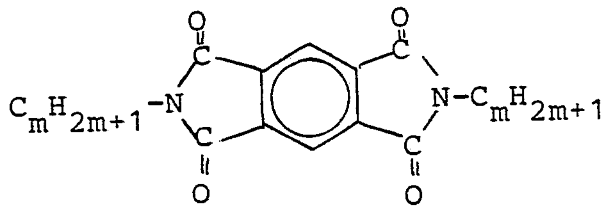

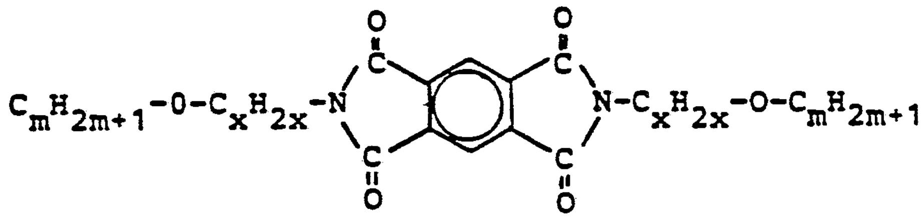

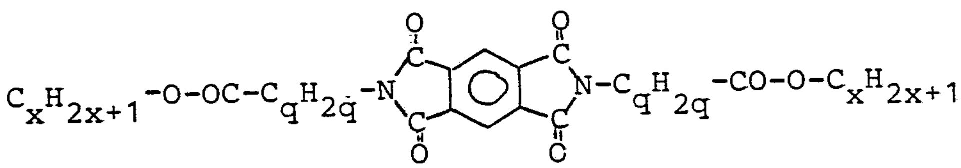

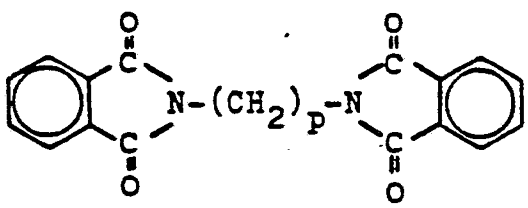

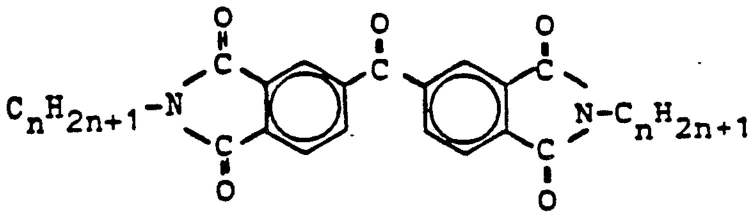

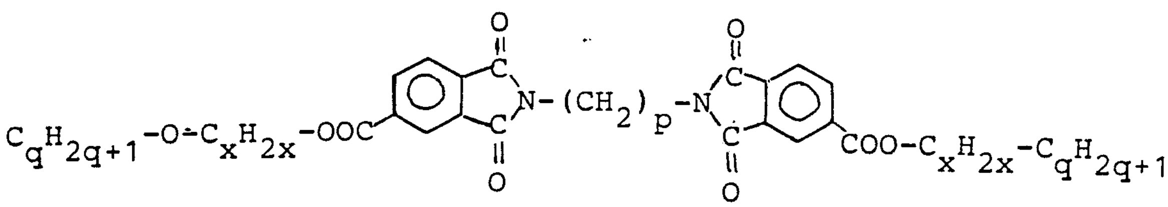

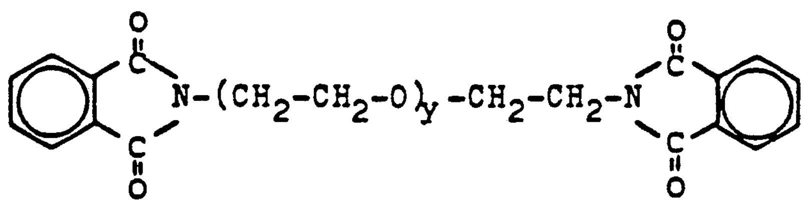

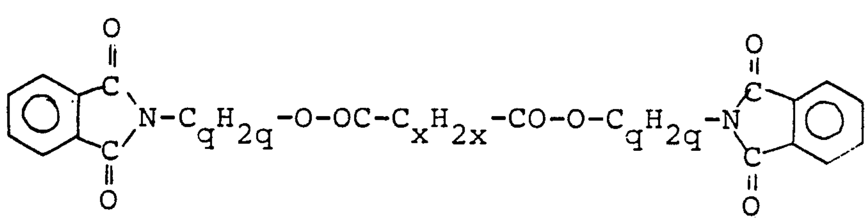

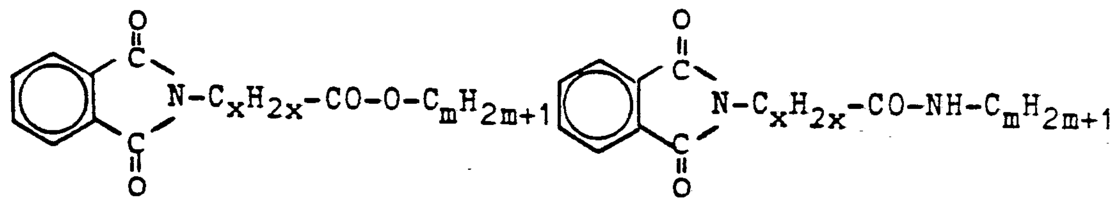

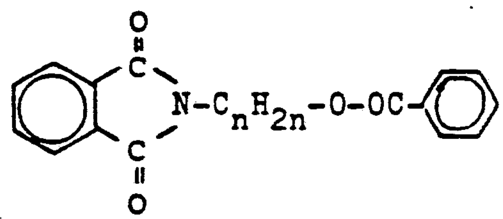

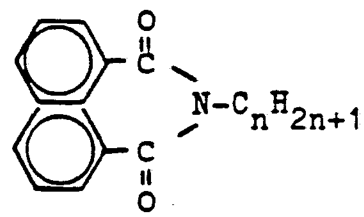

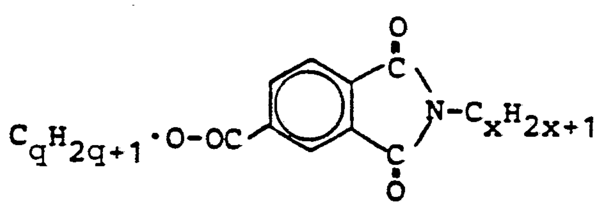

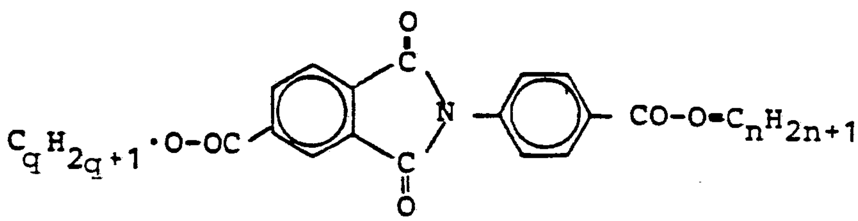

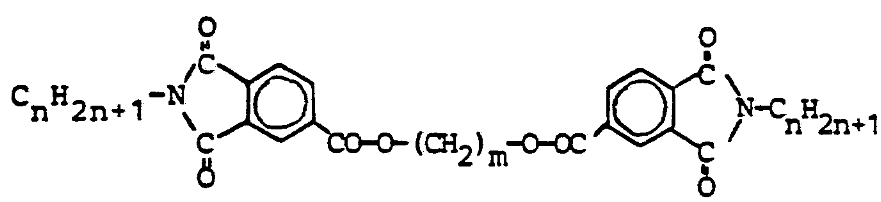

Konkrete Vertreter für die Komponente (C) sind:
N-(n-Octyl)-phthalimid, N-(n-Decyl)-phthalimid, N-(n-Dodecyl)-phthalimid, N-(n-Tetradecyl)-phthalimid, N-(n-Hexadecyl)-phthalimid, N-(n-Octadecyl)-phthalimid, N,N'-Bis-(n-octyl)-pyromellitdiimid, N,N'-Bis-(n-dodecyl)-pyromellitdiimid, 1,6-Bis-(phthalimido)-hexan, 1,6-Bis-(4-butoxyethoxycarbonyl-phthalimido)-hexan, N,N'-Bis-(6-hexansäureethylester)-pyromellitdiimid, 6-Phthalimido-hexansäure-n-butylamid, 1,12-Bis-(phthalimido)-dodecan, 1,12-Bis-(phthalimido)-4,9-dioxa-dodecan, 1-Benzoyloxy-3-phthalimido-propan, N,N'-Bis-(6-hexansäure-2'-ethylhexylester)-pyromellitdiimid, Adipinsäure-bis-(3-phthalimidopropyl)-ester, N,N'-Bis-(3-isononyloxypropyl)-pyromellitdiimid, N-(n-Dodecyl)-1,8-naphthalimid, N-(n-Tetradecyl)-1,8-naphthalimid, N-(n-Hexadecyl)-1,8-naphthalimid, N-(3-Isononyloxypropyl)-1,8-naphthalimid, N-Isobutylphthalimid-4-carbonsäure octadecylester.

Diese Beispiele sind nur eine Auswahl aus der Vielzahl der möglichen erfindungsgemäßen Strukturen und stellen keine Begrenzung der Erfindung dar. Im Einzelfall ist eine Imid-Verbindung mit einer solchen Struktur auszuwählen, die in der Polyester-Schmelze vollkommen oder zumindest teilweise, vorzugsweise zu mindestens zu 10 %, insbesondere zu mindestens 50 % löslich ist und einen Schmelzpunkt von unterhalb von 200 °C, speziell unterhalb von 100 °C besitzt.

Die Kristallisationsbeschleuniger werden in einer Menge eingesetzt, die ausreicht, um die Kristallisationstemperatur $T_x$ der Polyestermasse gegenüber einer sonst gleichen Zusammensetzung mit gleichem Molekulargewicht, aber ohne den Kristallisationsbeschleuniger, um 4 °C bis 50 °C, vorzugsweise um 6 °C bis 30 °C und insbesondere um 9 °C bis 20 °C abzusenken. Im allgemeinen sind hierfür Mengen von 0,1 bis 12 Gew.-%, vorzugsweise 1 bis 8 Gew.-% und besonders bevorzugt 3 bis 7 Gew.-%, bezogen auf die Mischung (A) bis (C), erforderlich.

Überraschenderweise haben die erfindungsgemäßen Imidverbindungen eine kristallisationsbeschleunigende Wirkung auf den Polyester und sind praktisch nicht reaktiv mit dem Polyester, so daß sie diesen bei der Einarbeitung und Verarbeitung praktisch nicht abbauen. Sie besitzen außerdem eine höhere Migrationsbeständigkeit als die bisher bekannten Kristallisationsbeschleuniger.

Die erfindungsgemäßen Polyestermassen können als Komponente (D) gegebenenfalls zusätzlich noch die bekannten Verstärkungsmittel, wie z.B. Glasfasern, Kohlefasern, Metallcarbidfasern, Glaskugeln udgl. enthalten, wie sie beispiels weise in der DE-Patentschrift 2.920.246 und der US-Patentschrift 4.483.995 beschrieben sind. Deren Menge liegt im allgemeinen zwischen 0 und 150 Gew.-Teilen, vorzugsweise zwischen 0 und 100 Gew.-Teilen pro 100 Gew.-Teilen des Polyesters. Die Zugabe dieser Zusätze kann an jeder geeigneten Stelle im Verlauf der Herstellung der erfindungsgemäßen Polyestermassen erfolgen.

Weiter können die erfindungsgemäßen Polyestermassen bekannte Zusatzstoffe, wie z.B. Füllstoffe, Flammschutzmittel, Schlagzähmodifikatoren, Stabilisatoren, Formtrennmittel, Antistatika oder ähnliches, enthalten. Derartige Zusatzstoffe sind beispielsweise in der DE-Patentschrift 29 20 246 oder in R. Gächter, H. Müller, Kunststoff-Additive, Carl Hanser Verlag 1983 (München, Wien) beschrieben.

Die erfindungsgemäßen erhältlichen Formmassen erlauben die Herstellung wärmeformbeständiger Formkörper mit großer Dimensionsstabilität, wie beispielsweise Zahn-und Kegelräder, Zahnstangen, Kupplungsscheiben, Führungselemente, Bauteile für elektronische Geräte und dergleichen.

Die Herstellung der erfindungsgemäßen Formmasse kann durch Vermischen der Bestandteile in beliebiger Weise erfolgen. Beispielsweise kann der trockene Polyester (A) in einer geeigneten Mischvorrichtung oder Trommel mit den Bestandteilen (B) und (C) vermischt und das Gemisch dann - schmelzextrudiert werden. Das Extrudat kann dann in einer zweiten Stufe mit weiteren Zusatzstoffen, z.B. Verstärkungsfasern, erneut in einem geeigneten Compoundierextruder vermischt und schmelzextrudiert werden. Zweckmäßigerweise werden jedoch alle vorgesehenen Bestandteile in einem Arbeitsgang vermischt und schmelzextrudiert.

Es ist aber auch möglich, gemäß der DE-OS 35 32 033 zu verfahren. Danach wird zunächst in einer ersten Stufe ein nukleierter oder hochnukleierter Polyester in Gegenwart von (Erd-)Alkalimetall oder einer (Erd-)Alkalimetall-Verbindung hergestellt, worauf dann anschließend in einer zweiten Stufe diesem Polyester gegebenenfalls weiterer nichtnukleierter Polyester sowie der Kristallisationsbeschleuniger (C) zugegeben werden. Diese Verfahrensweise besitzt eine Reihe von Vorteilen und ist daher in der Regel bevorzugt. Im einzelnen erfolgt danach die Herstellung der erfindungsgemäßen Polyesterformmassen in der Weise, daß zunächst der Polyester (A) hergestellt und diesem dann gegebenenfalls die Komponenten (B) und (D) sowie die Komponente (C) zugegeben werden, dadurch gekennzeichnet, daß die Herstellung des Polyesters (A) nach dem Veresterungs-/Polykondensationsverfahren und/oder dem Umesterungs-/Polykondensationsverfahren erfolgt, wobei zumindest ein Teil des Polyesters in Gegenwart von (Erd-)Alkalimetall oder einer (Erd-)Alkalimetall-Verbindung hergestellt wird, so daß in einer ersten Stufe zunächst ein nukleierter oder hochnukleierter Polyester resultiert und anschließend in einer zweiten Stufe diesem Polyester gegebenenfalls weiterer nichtnukleierter Polyester sowie der Kristallisationsbeschleuniger (C) zugegeben werden, wobei die Menge die letzteren so groß ist, daß die Kristallisationstemperatur gegenüber derjenigen des Polyesters ohne diesen organischen Kristallisationsbeschleuniger um mindestens 4°C erniedrigt ist. Als Maß für die Molekulargewichte der untersuchten Polyesterproben wird deren reduzierte spezifische Lösungsviskosität angesehen, bestimmt an einprozentigen Lösungen der Proben in Dichloressigsäure (c = 1 g/dl) bei 25°C. Zur Meßmethode s.a. M. Hofmann, H. Krömer, R. Kuhn, Polymeranalytik I, Georg Thieme Verlag, Stuttgart (1977). Aus den gemessenen Laufzeiten von Lösung (t) und Lösungsmittel ($t_o$) ergibt sich mit der Gewichtsfraktion des in der jeweiligen Probe enthaltenden Polyesters x (hierzu zählen sowohl nukleierter, hochnukleierter und nichtnukleierter Polyester) die reduzierte spezifische Lösungsviskosität nach folgender Formel:

$$\eta_{red} = \frac{[to^{-1} \cdot (t-to)] - 1}{c \cdot x}$$

Die Beurteilung des Kristallisationsverhaltens erfolgte differentialkalorimetrisch mit Hilfe des Gerätes DSC-2C der Firma Perkin-Elmer. Zur Erzielung einer jeweils gleichen thermischen Vorgeschichte wurden alle Proben (gemahlenes Granulat) vor dem Messen jeweils 5 min bei 290°C unter Stickstoffatmosphäre aufgeschmolzen und anschließend auf etwa 0°C abgeschreckt. Im anschließenden Meßzyklus wurden die Proben mit 10°C/min unter Stickstoffatmosphäre von Raumtemperatur auf 290°C aufgeheizt und dann

direkt mit 20°C/min abgekühlt. Beim Aufheizen der abgeschreckten Proben tritt im Meßzyklus ein exothermer Kristallisationspeak auf, dessen Maximum im folgenden als Kristallisationstemperatur $T_K$ bezeichnet wird. Beim Abkühlen aus der Schmelze zeigen der Proben ebenso einen Kristallisationspeak, dessen Maximum im folgenden als Rekristallisationstemperatur $T_R$ bezeichnet wird.

Das Kristallisationsverhalten des Polyesters ist nun umso besser, je höher $T_R$ und je niedriger $T_K$ liegen. Diese beiden Temperaturen sind in gewisser Weise ein Maß dafür, in welchem Temperaturbereich die Kristallisation des Polyesters ablaufen kann. Nukleierte Proben zeigen gegenüber nichtnukleierten Proben gleichen Molekulargewichts sowohl höhere Rekristallisationstemperaturen $T_R$ als auch niedrigere Kristallisationstemperaturen $T_K$ und damit bereits ein verbessertes Kristallisationsverhalten. Durch den weiteren Zusatz von organischen Kristallisationsbeschleunigern bleibt die Rekristallisationstemperatur praktisch unbeeinflußt, die Kristallisationstemperatur wird aber weiter abgesenkt, das heißt die Kristallisation kann nun auch bei noch tieferen Temperaturen erfolgen. Damit wird gleichzeitig auch das Verarbeitungsverhalten des Polyesters weiter verbessert. Im Spritzgußverfahren können nun z.B. niedrigere Temperaturen angewendet werden, Formtrennverhalten und Oberflächenglanz des Formteils werden günstig beeinflußt.

Bekannt ist, daß das Kristallisationsverhalten vom Molekulargewicht der Polyester und damit von der Lösungsviskosität abhängt. Direkt vergleichbar sind deshalb nur solche Meßwerte, die an Proben mit praktisch gleichem Molekulargewicht bzw. gleicher Lösungsviskosität gemessen wurden. Als Maß für die Molekulargewichte der Polyesterproben wird deren reduzierte spezifische Lösungsviskosität $\eta_{red.}$ angesehen, bestimmt an 1 %igen Lösungen in Dichloressigsäure bei 25°C. Bei der Messung der Polyesterproben mit zugesetzten Kristallisationsbeschleunigern wird die reduzierte spezifische Viskosität aus der entsprechenden Gewichtsfraktion des Polyesters berechnet.

<u>Beispiele 1 bis 25 und Vergleichsbeispiele 1 bis 3:</u>

875 Teile Polyethylenterephthalat mit der reduzierten spezifischen Viskosität von 0,82 wurden mit 125 Teilen Polyethylenterephthalat, das durch Zusatz von 2,1 % Natriumacetat zur Umesterung hergestellt worden war und das somit einen Gehalt von 256 mmol Na/kg besaß, vermischt, so daß der Natrium-Gehalt der Mischung 32 mmol/kg betrug.

Bei den Vergleichsversuchen 1 und 2 wurde diese mit Natrium nukleierte Polyestermischung ohne den Zusatz eines organischen Kristallisationsbeschleunigers schmelzextrudiert und die Kristallisationseigenschaften durch DSC (Differential-Scanning-Calorimetry) gemessen.

Bei den Beispielen 1 bis 25 und dem Vergleichsbeispiel 3 wurden zu der Polyethylenterephthalat-Mischung mit 32 mmol Na/kg die organischen Kristallisationsbeschleuniger in den angegebenen Prozentmengen, bezogen auf den Polyester, gegeben, gut eingemischt und diese Mischung über einen Zweischneckenextruder schmelzextrudiert. In der Tabelle 1 mit den Beispielen 1 bis 13 und dem Vergleichsbeispiel 1 sind die Versuche aufgeführt, die Polyestermuster mit reduzierten spezifischen Viskositäten von etwa 0,7 dl/g ergaben und in der Tabelle 2 mit den Beispielen 14 bis 25 und den Vergleichsbeispielen 2 und 3 die Versuche mit Viskositäten etwa 0,8 dl/g, damit die Vergleichbarkeit der Kristallisationseigenschaften gegeben ist. Aus dem Vergleich der Kristallisationstemperaturen $T_K$ ist die Wirksamkeit der erfindungsgemäßen Imidverbindungen als Kristallisationsbeschleuniger zu ersehen. Vergleichsbeispiel 3 zeigt, daß eine nicht erfindungsgemäße Imidverbindung, die ein cycloaliphatisches Ringsystem statt einer längeren aliphatischen Kette zwischen zwei Imidgruppen enthält, nur eine sehr geringe Wirksamkeit als Kristallisationsbeschleuniger aufweist.

<u>Beispiele 26 und 27 und Vergleichsbeispiele 4 bis 6:</u>

Es wurde wie in den vorhergehenden Beispielen verfahren mit dem Unterschied, daß als Polyethylenterephthalat und als mit Natriumacetat nukleiertes Polyethylenterephthalat-Masterbatch hochmolekulare Polyester mit $\eta_{red.}$ = 1,25 bzw. 1,23 dl/g eingesetzt wurden, die durch Feststoff-Nachkondensation erhalten worden waren.

Im Vergleichsbeispiel 4 wurde die Polyestermischung ohne Zusatz einer Imidverbindung - schmelzextrudiert, das die Kristallisationseigenschaften eines nur mit Natrium nukleierten Polyesters zeigt.

In den Vergleichsbeispielen 5 und 6 wurden zum Stand der Technik gehörende Esterverbindungen als Kristallisationsbeschleuniger in gleichen Prozentmengen wie die Imidverbindungen in den Beispielen 26 und 27 eingesetzt.

In der Tabelle 3 sind die Versuchsergebnisse aufgeführt. Ein Vergleich der Lösungsviskositäten der erhaltenen Polyester-Extrudate zeigt, daß die Esterverbindungen in den Vergleichsbeispielen 5 und 6 den Polyester während der Schmelzextrusion deutlich abbauen, während die Imidverbindungen in den Beispieln 26 und 27 keinen Viskositätsabbau des Polyesters während der Schmelzextrusion verursachen. Die Kristallisationstemperaturen $T_K$sind zwar durch den Zusatz der Esterverbindungen ebenfalls abgesenkt, jedoch ist wegen des unterschiedlichen Molekulargewichts der Polyester-Produkte kein exakter Vergleich möglich. Bei einer Extrapolation der Kristallisationstemperaturen auf die höhere Polyesterviskosität der Beispiele 26 und 27 würden die $T_K$-Werte der Vergleichsbeispiele um einige °C höher liegen. Für eine Extrapolation fehlt aber die Kenntnis der exakten Abhängigkeit.

Tabelle 1

Polyester-Mischung: DSC-Meßergebnisse*

| Beispiel | Organ. Kristallisationsbeschleuniger | DSC-$T_S$ °C | Gew.-% Zusatz | $\eta_{red.}$ dl/g | $T_G$ °C | $T_K$ °C | $T_R$ °C |
|---|---|---|---|---|---|---|---|
| 1 | N-(n-Octyl)-phthalimid | 48 | 4 | 0,72 | 68 | 114 | 207 |
| 2 | " | 48 | 5 | 0,71 | 63 | 110 | 208 |
| 3 | " | 48 | 7 | 0,69 | 56 | 104 | 209 |
| 4 | N-(n-Dodecyl)-phthalimid | 65 | 4 | 0,70 | 63 | 108 | 208 |
| 5 | " | 65 | 6 | 0,71 | 59 | 104 | 209 |
| 6 | N-(n-Octadecyl)-phthalimid | 79 | 4 | 0,70 | 69 | 114 | 210 |
| 7 | N,N'-Bis-(n-octyl)-pyrometllitdiimid | 180 | 5 | 0,72 | 70 | 115 | 209 |
| 8 | " | 180 | 6 | 0,71 | 68 | 114 | 208 |
| 9 | N,N'-Bis-(n-dodecyl)-pyromellitdiimid | 159 | 6 | 0,71 | 73 | 118 | 209 |
| 10 | 1,6-Bis-(phthalimido)-hexan | 180 | 6 | 0,70 | 70 | 115 | 208 |
| 11 | 1,6-Bis-(4-butoxyethoxycarbonyl-phthalimido)-hexan | 79 | 6 | 0,72 | 72 | 115 | 212 |
| 12 | N,N'-Bis-(6-hexansäureethylester)-pyromellitdiimid | 137 | 6 | 0,70 | 68 | 111 | 212 |
| 13 | 6-Phthalimido-hexansäure-n-butylamid | 119 | 6 | 0,69 | 66 | 111 | 211 |
| Vergl.-beisp. | | | | | | | |
| 1 | – | – | – | 0,72 | 79 | 124 | 208 |

*Abkürzungen:

DSC = Diffential-Scanning-Calorimetry

$T_S$ = Schmelzpunkt

$\eta_{red}$ = reduzierte spezifische Lösungsviskosität

$T_G$ = Glastemperatur

$T_K$ = Kristallisationstemperatur

$T_R$ = Rekristallisationstemperatur

Tabelle 2

| Beispiel | Organ. Kristallisationsbeschleuniger | DSC-$T_S$ °C | Gew.-% zusatz | Polyester-Mischung: $\eta_{red.}$ dl/g | DSC-Meßergebnisse* $T_G$ °C | $T_K$ °C | $T_R$ °C |
|---|---|---|---|---|---|---|---|
| 14 | N-(n-Dodecyl)-phthalimid | 65 | 5 | 0,81 | 66 | 110 | 208 |
| 15 | " | 65 | 6 | 0,80 | 63 | 107 | 208 |
| 16 | " | 65 | 7 | 0,80 | 63 | 106 | 208 |
| 17 | 1,12-Bis-(phthalimido)-dodecan | 119 | 4 | 0,75 | 71 | 116 | 208 |
| 18 | " | 119 | 6 | 0,75 | 69 | 114 | 209 |
| 19 | 1,12-Bis-(phthalimido)-4,9-dioxa-dodecan | 114 | 4 | 0,76 | 70 | 115 | 210 |
| 20 | " | 114 | 6 | 0,75 | 67 | 114 | 207 |
| 21 | 1-Benzoyloxy-3-phthalimido-propan | 79 | 5 | 0,75 | 68 | 113 | 210 |
| 22 | N,N'-Bis-(6-hexansäure-2'-ethylhexyl-ester)-pyromellitdiimid | 67 | 5 | 0,80 | 71 | 113 | 211 |
| 23 | " | 67 | 7 | 0,82 | 71 | 111 | 211 |
| 24 | Adipinsäure-bis-(3-phthalimidopropyl)-ester | 96 | 6 | 0,80 | 71 | 111 | 212 |
| 25 | " | 96 | 7 | 0,79 | 69 | 110 | 212 |
| Vergl.-beisp. | | | | | | | |
| 2 | - | - | - | 0,80 | 79 | 125 | 205 |
| 3 | 1,3-Bis-(phthalimidomethyl)-cyclohexan | 191 | 6 | 0,78 | 75 | 121 | 206 |

*Abkürzungen s. Tabelle 1

Tabelle 3

| Beispiel | Organ. Kristallisationsbeschleuniger | DSC-$T_S$ °C | Gew.-% Zusatz | Polyester-Mischung: $\eta_{red.}$ dl/g | DSC-Meßergebnisse* $T_G$ °C | $T_K$ °C | $T_R$ °C |
|---|---|---|---|---|---|---|---|
| 26 | N-(n-Dodecyl)-phthalimid | 65 | 6 | 1,17 | 65 | 111 | 205 |
| 27 | N,N'-Bis-(n-octyl)-pyromellitdiimid | 180 | 6 | 1,17 | 71 | 117 | 205 |
| Vergl. beisp. | | | | | | | |
| 4 | - | - | - | 1,18 | 80 | 126 | 207 |
| 5 | Neopentylglykoldibenzoat | 51 | 6 | 1,08 | 67 | 113 | 209 |
| 6 | Glycerintribenzoat | 69 | 6 | 0,85 | 69 | 112 | 210 |

*Abkürzungen s. Tabelle 1

Beispiel 28

25 g der schnellkristallisierenden Polyestermischung von Beispiel 5 wurden als geschnittenes Stranggranulat nach einer Trocknung über Nacht bei 50°C im Vakuumtrockenschrank mit Toluol 10 Minuten gewaschen, um den oberflächlichen Anteil des Kristallisationsbeschleunigers zu entfernen. Das isolierte Granulat wurde in einem mit Aluminiumfolie abgedeckten Gefäß bei 140°C in einem Trockenschrank 96 Stunden getempert. Danach wurde das abgekühlte Polyestergranulat mit 50 ml Toluol 10 Minuten gerührt, vom Polyestergranulat abfiltriert und in der Lösung das von der Oberfläche des Polyesters abgewaschene N-(n-Dodecyl)-phthalimid mit Hilfe der HPLC-Chromatographie (High Pressure Liquid Chromatography) bestimmt. Die Toluollösung hatte einen Gehalt von 0,0055 % der Imidverbindung, die durch die Temperung aus dem Inneren des Polyesters an die Oberfläche migriert und durch das Lösungsmittel abgewaschen worden war.

Vergleichsbeispiel 7

Analog der Beispiele 1 bis 25 wurde eine schnellkristallisierende Polyestermischung mit 6 Teilen Neopentylglykoldibenzoat auf 100 Teile Polyethylenterephthalat mit 32 mVal Na/kg hergestellt. 25 g des Polyestergranulats wurde analog Beispiel 28 behandelt (gleichzeitige Temperung) und mit der gleichen Menge Toluol abgewaschen. In dieser Waschlösung wurde ein Gehalt von 0,024 % Neopentylglykoldibenzoat bestimmt, das also wesentlich stärker als die Imidverbindung von Beispiel 28 an die Polyesterooberfläche migriert war.

Vergleichsbeispiel 8

Analog dem Vergleichsbeispiel 7 wurde ein schnellkristallisierender Polyester, der 6 Teile Adipinsäure-bis-(2-phenoxyethyl)-ester auf 100 Teile Polyethylenterephthalat enthielt, behandelt. In der Toluolwaschlösung wurde ein Gehalt 0,011 % des organischen Kristallisationsbeschleunigers bestimmt, der also auch wesentlich stärker als die Imidverbindung im Beispiel 28 migriert war.

## Ansprüche

1. Polyesterformmasse bestehend im wesentlichen aus
(A) einem Polyester mit einer reduzierten spezifischen Viskosität (gemessen in 1 %iger Lösung in Dichloressigsäure bei 25°C) von mindestens 0,3 dl/g,
(B) einem Nukleierungsmittel,
(C) einer niedermolekularen organischen Verbindung als Kristallisationsbeschleuniger und
(D) gegebenenfalls Verstärkungsmitteln sowie anderen Zusatzstoffen,
dadurch gekennzeichnet, daß (C) eine organische Imidverbindung ist, die $\alpha$) mindestens eine mit einem aliphatischen Rest mit mindestens 5 C-Atomen substituierte Imidgruppe pro Molekül enthält, oder $\beta$) eine Imidesterverbindung ist, bei der die Imidgruppe mit einem aliphatischen Rest mit mindestens 2 C-Atomen oder mit dem Rest eines aromatischen Carbonsäureesters substituiert ist, einen Schmelzpunkt von unter 200°C hat und in einer Menge vorhanden ist, die ausreicht, um die Kristallisationstemperatur der Formmasse gegenüber derjenigen ohne (C) um mindestens 4°C zu erniedrigen.

2. Verfahren zur Herstellung einer Polyesterformmasse bestehend im wesentlichen aus
(A) einem Polyester mit einer reduzierten spezifischen Viskosität (gemessen in 1 %iger Lösung in Dichloressigsäure bei 25°C) von mindestens 0,3 dl/g,
(B) einem Nukleierungsmittel,
(C) einer niedermolekularen organischen Verbindung als Kristallisationsbeschleuniger und
(D) gegebenenfalls Verstärkungsmitteln sowie anderen Zusatzstoffen,
wobei zunächst der Polyester (A) hergestellt und diesem dann gegebenenfalls die Komponenten (B) und (D) sowie die Komponente (C) zugegeben werden, dadurch gekennzeichnet, daß die Herstellung des Polyesters (A) nach dem Veresterungs-/Polykondensationsverfahren, dem Umesterungs Polykondensationsverfahren oder beiden erfolgt, wobei zumindest ein Teil des Polyesters in Gegenwart von (Erd-)Alkalimetall oder einer (Erd-)Alkalimetall-Verbindung hergestellt wird, so daß in einer ersten Stufe zunächst ein nukleierter oder hochnukleierter Polyester resultiert, und anschließend in einer zweiten Stufe diesem Polyester gegebenenfalls weiterer nichtnukleierter Polyester sowie der Kristallisationsbeschleuniger (C) zugegeben werden, wobei die Menge des letzteren so groß ist, daß die Kristallisationstemperatur gegenüber derjenigen des Polyesters ohne diesen organischen Kristallisationsbeschleuniger um mindestens 4°C erniedrigt ist, (C) eine organische Imidverbindung ist, die $\alpha$) mindestens eine mit einem aliphatischen Rest mit mindestens 5 C-Atomen substituierte Imidgruppe pro Molekül enthält, oder $\beta$) eine Imidesterverbindung ist, bei der die Imidgruppe mit einem aliphatischen Rest mit mindestens 2 C-Atomen oder dem Rest eines aromatischen Carbonsäureesters substituiert ist und einen Schmelzpunkt von unter 200°C hat.

3. Verfahren nach Anspruch 2, dadurch gekennzeichnet, daß die Menge an (Erd-)Alkalimetall oder der (Erd-)Alkalimetall-Verbindung in der ersten Stufe $2 \bullet 10^{-2}$ bis 1 mol pro kg des hochnukleierten Polyesters beträgt und daß in der zweiten Stufe nichtnukleierter Polyester gleicher oder anderer chemischer Zusammensetzung zugegeben wird.

4. Verfahren nach Anspruch 2 oder 3, dadurch gekennzeichnet, daß die Menge des in der zweiten Stufe zugegebenen nichtnukleierten Polyesters so groß ist, daß die Menge an (Erd-)Alkali in dem Polyester (A) $2 \bullet 10^{-3}$ bis 0,1 mol pro kg dieses Polyesters beträgt.

5. Verfahren nach einem oder mehreren der Ansprüche 2 bis 4, dadurch gekennzeichnet, daß zur Herstellung des Poly esters gemäß der ersten Verfahrensstufe das Umesterungs-/Polykondensationsverfahren angewendet wird.

6. Ausführungsform nach einem oder mehreren der Ansprüche 1 bis 5, dadurch gekennzeichnet, daß die organische Imidverbindung (C) mindestens eine der folgenden Bedingungen erfüllt:

a) einen Schmelzpunkt von unter 150°C besitzt,

b) aus einem oder mehreren aromatischen Kernen besteht und der Substituent am Imid-Stickstoff eine aliphatische Kette mit 8 bis 18 C-Atomen ist,

c) die allgemeine Formel

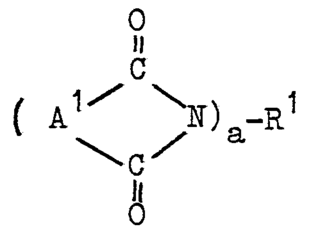

(I)

besitzt, in der $A^1$ ein substituierter oder unsubstituierter divalenter, aromatischer Rest ist, $R^1$einen substituierten oder unsubstituierten aliphatischen Rest darstellt, der Heteroatome oder Gruppierungen mit Heteroatomen enthalten kann und dessen Wertigkeit a entspricht, und a für 1 oder 2 stehen,

d) die allgemeine Formel

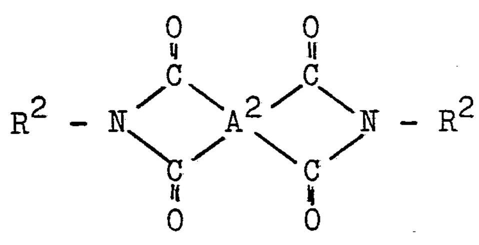

(II)

besitzt, in der $A^2$ einen substituierten oder unsubstituierten tetravalenten aromatischen Rest darstellt und die Reste $R^2$ gleich oder verschieden sind und die gleiche Bedeutung wie $R^1$ haben,

e) die allgemeine Formel

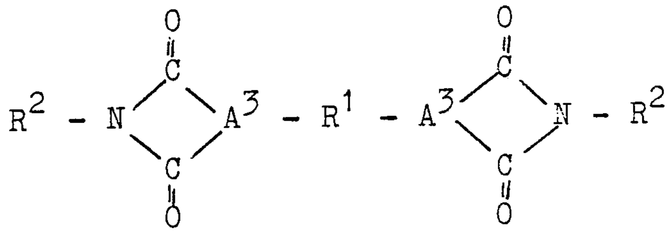

(III)

besitzt, in der $R^1$ und $R^2$ die obengenannte Bedeutung besitzen, $A^3$ ein aromatisches Ringsystem mit 6 - 10 C-Atomen ist und $R^2$ und $A^3$ jeweils gleich oder verschieden sind,

f) in einer Menge von 1 bis 8 Gew.-%, bezogen auf die Mischung (A) bis (C), vorhanden ist.

7. Ausführungsform nach einem oder mehreren der Ansprüche 1 bis 6, dadurch gekennzeichnet, daß Heteroatome in den Resten $R^1$ und $R^2$ O, S oder NR' darstellen, wobei R' dem Rest $R^1$ entspricht oder zusätzlich $C_{1-4}$-Alkyl bedeutet und die Gruppierungen mit Heteroatomen in den Resten $R^1$ und $R^2$,vorzugsweise Carbonsäureester und/oder Carbonsäureamid-Gruppen,darstellen.

8. Ausführungsform nach einem oder mehreren der Ansprüche 1 bis 8, dadurch gekennzeichnet, daß der Polyester (A) Polyethylenterephthalat oder ein Gemisch aus Polyethylenterephthalat und Polybutylenterephthalat ist.

9. Ausführungsform nach einem oder mehreren der Ansprüche 1 bis 8, dadurch gekennzeichnet, daß das Nukleierungsmittel (B) eine Alkalimetall-Verbindung darstellt und vorzugsweise ein Natriumsalz einer Mono-oder Polycarbonsäure oder ein Natriumalkoholat ist.

10. Verwendung der Formmasse nach einem oder mehreren der Ansprüche 1 und 6 bis 9 zur Herstellung von Formkörpern.